# FASCICULE DE BREVET EUROPEEN

(11) **EP 0 708 949 B1**
(45) Date de publication et mention de la délivrance du brevet: **15.09.1999**
(21) Numéro de dépôt: 95920129.4
(22) Date de dépôt: 09.05.1995
(51) Int. Cl.: G07F 7/10, H04L 9/08

(54) **PROCEDE POUR PRODUIRE UNE CLE COMMUNE DANS DEUX DISPOSITIFS EN VUE DE METTRE EN OEUVRE UNE PROCEDURE CRYPTOGRAPHIQUE COMMUNE, ET APPAREIL ASSOCIE**
VERFAHREN UND VORRICHTUNG ZUR ERZEUGUNG EINES GEMEINSAMEN SCHLÜSSELS IN ZWEI VORRICHTUNGEN FÜR DIE DURCHFÜHRUNG EINER GEMEINSAMEN VERSCHLÜSSELUNGSPROZEDUR
METHOD FOR THE PRODUCTION OF A KEY COMMON TO TWO DEVICES FOR IMPLEMENTING A COMMON CRYPTOGRAPHIC PROCEDURE AND ASSOCIATED APPARATUS

(30) Priorité: 10.05.1994 FR 9405883
(43) Date de publication de la demande: 01.05.1996
(73) Titulaire: BULL CP8, 78430 Louveciennes (FR); BANKSYS S.A., 1130 Bruxelles (BE)
(72) Inventeur: MOULART, Yves, B-1190 Bruxelles (BE); DAWIRS, Michel, B-1970 Wezembeek (BE); HAZARD, Michel, F-78124 Mareil-sur-Mauldre (FR)
(74) Mandataire: Corlu, Bernard Edouard
(86) Numéro de dépôt international: FR9500607
(87) Numéro de publication internationale: WO9530976

(56) Documents cités:
- EP-A- 0 138 320
- EP-A- 0 613 105
- US-A- 5 204 901
- RAMESH KARRI 'IEEE INFOCOM'88.The conference on computer communications:Proceedings.A security imbedded authentication protocol.' Mars 1988 , INSTITUTE OF ELECTRICAL AND ELECTRONICS ENGINEERS , NEW ORLEANS US XP 000093591 152160 voir page 1105 - page 1109

## Description

L'invention est relative à un procédé pour produire une clé commune K attribuée à un quelconque dispositif CEₖ d'un ensemble de premiers dispositifs CE et à un quelconque dispositif PMEᵢ d'un ensemble de seconds dispositifs PME pour que ces deux dispositifs mettent en oeuvre une procédure cryptographique commune.

Un procédé classique consiste à attribuer à l'ensemble des premiers dispositifs CE une clé mère commune et, à chacun des seconds dispositifs PME une clé fille différente, obtenue par diversification de la clé mère au moyen d'une donnée d'identification du second dispositif considéré.

On établit ainsi une hiérarchie entre les premiers et seconds dispositifs puisque le niveau de sécurité des premiers est plus élevé que celui des seconds.

Lors d'une session entre un premier dispositif CE et un second dispositif PME, ce dernier transmet au premier sa donnée d'identification de façon que le premier dispositif calcule la clé fille du second dispositif à partir de sa clé mère : cette clé fille constitue la clé commune K.

Ce procédé donne satisfaction vis-à-vis d'une tentative de fraude au niveau d'un des seconds dispositifs PME. En effet, la violation d'un second dispositif PME permettra au fraudeur de découvrir au mieux une clé fille, mais pas de prendre connaissance de la clé mère qui seule lui aurait permis de produire de nouvelles clés filles frauduleuses compatibles avec la clé mère, pour fabriquer des seconds dispositifs frauduleux PME.

En revanche, la violation d'un des premiers dispositifs CE par le fraudeur risque de lui donner accès à la clé mère.

Le document EP-A-613105 appartenant à l'état de la technique visé à l'article 54(3) CBE divulgue un procédé de gestion de clés secrètes entre deux cartes à mémoire, le procédé consistant
- à fournir un même nombre aléatoire à chacune des cartes à mémoire;
- à transmettre un premier code d'identité de la première à la seconde carte à mémoire;
- à transmettre un second code d'identité de la seconde à la première carte à mémoire;
- à appliquer, dans chacune des cartes à mémoire, un algorithme de diversification pour déterminer un même nombre secret ;
- à calculer une clé de session commune à chacune des cartes à mémoire à partir d'un algorithme de calcul de clé de session.

Le problème que vise à résoudre l'invention est de proposer un procédé du genre cité au début de l'exposé, qui offre une bonne immunité vis-à-vis d'une violation de l'un quelconque des deux dispositifs PME et CE entre lesquels intervient une procédure cryptographique commune.

A cet effet, le procédé selon l'invention comprend les étapes consistant à attribuer une première clé mère KC à chacun desdits premiers dispositifs CE, et une seconde clé mère KP à chacun desdits seconds dispositifs PME ; à attribuer à chaque premier dispositif CEₖ, à partir de la seconde clé mère KP relative aux seconds dispositifs PMEᵢ et d'une donnée d'identification ck attribuée à ce premier dispositif CEₖ, au moins une clé fille KP_{ck} ; à attribuer à chaque second dispositif PMEᵢ, à partir de la première clé mère KC relative aux premiers dispositifs CEₖ et d'une donnée d'identification pi attribuée à ce second dispositif PMEᵢ, au moins une clé fille KCₚᵢ, et à chaque fois qu'une procédure cryptographique entre un premier dispositif PMEᵢ et un second dispositif CEₖ est demandée : transmettre, depuis chacun de ces deux dispositifs, la donnée d'identification pi, ck à l'autre dispositif ; élaborer, dans chacun de ces deux dispositifs, une clé fille KP_{ck}, KCₚᵢ à partir de la clé mère KP, KC du dispositif considéré et de la donnée d'identification ck, pi reçue de l'autre dispositif ; sélectionner, dans chacun de ces deux dispositifs, la clé fille KCₚᵢ, KP_{ck} correspondant à la donnée d'identification pi,ck reçue de l'autre dispositif ; et associer les deux clés filles constituées par la clé fille KP_{ck} ; KCₚᵢ élaborée à l'occasion de cette procédure et la clé fille sélectionnée KCₚᵢ ; KP_{ck} pour former un couple constituant ladite clé commune K.

Ainsi, de façon surprenante, on répartit les données les plus secrètes, c'est-à-dire les clés mères KC,KP dans les premiers et les seconds dispositifs, et ce quelque soit par ailleurs la différence de niveau hiérarchique pouvant exister entre les deux ensembles de dispositifs et liée à l'application considérée (par exemple : entre un serveur de bases de données et un terminal donnant accès à celui-ci , entre une caisse électronique d'un commerçant et un porte-monnaie électronique d'un client). En ce qui concerne la nature des clés détenues par les premiers et seconds dispositifs, ceux-ci présentent le même niveau de sécurité.

La violation d'un premier ou d'un second dispositif PMEi permet au mieux au fraudeur de se procurer l'une des clés mères KP, mais pas l'autre KC. Or, dans la mesure où la ou les clés filles KCₚᵢ présentes dans ce dispositif PMEᵢ ne sont valables que pour ce dispositif particulier, il ne peut les utiliser pour les mettre dans de nouveaux dispositifs frauduleux mais il lui faudrait au contraire être capable de recréer, pour chaque dispositif frauduleux, les indispensables clés filles KCₚᵢ compatibles avec la donnée d'identification pi de ce dispositif.

L'invention concerne aussi l'appareil associé à ce procédé.

D'autres détails et avantages de l'invention apparaîtront au cours de la description suivante d'une forme de réalisation préférée mais non limitative, en regard des dessins annexés, sur lesquels :
La figure 1 présente deux clés maîtres KCM et KPM et leur décomposition en plusieurs clés mères ;
La figure 2 présente la façon dont chaque clé mère KPᵢ est elle-même décomposée en plusieurs clés filles KP_{icj}, et la façon dont on attribue à une caisse électronique KC₄ plusieurs de ces clés filles ;
La figure 3 présente une famille N° 19 de porte-monnaie dont chaque porte-monnaie possède une clé mère commune KP₁₉ et plusieurs clés filles KCᵢₚⱼ, et un groupe N° 4 de caisses électroniques, dont chaque caisse possède une clé mère commune KC₄ et plusieurs clés filles KP_{icj} ; et
La figure 4 présente un mode de production d'une clé diversifiée K_{1d} à partir d'une clé de base K₁ et d'une donnée de diversification E.

L'exemple de réalisation présenté prend en considération deux types de dispositifs, le premier étant une caisse électronique CE disposée dans un terminal point de vente d'un commerçant et le second étant un porte-monnaie électronique PME constitué d'un objet portatif se présentant sous la forme d'une carte du genre carte bancaire, et distribué à chaque client potentiel. Chaque caisse comme chaque porte-monnaie comprend des moyens de traitement de l'information, par exemple sous la forme d'un microprocesseur associé, sur une même puce, à une mémoire non volatile autoprogrammable et tel que défini par le brevet français N° 2 461 301.

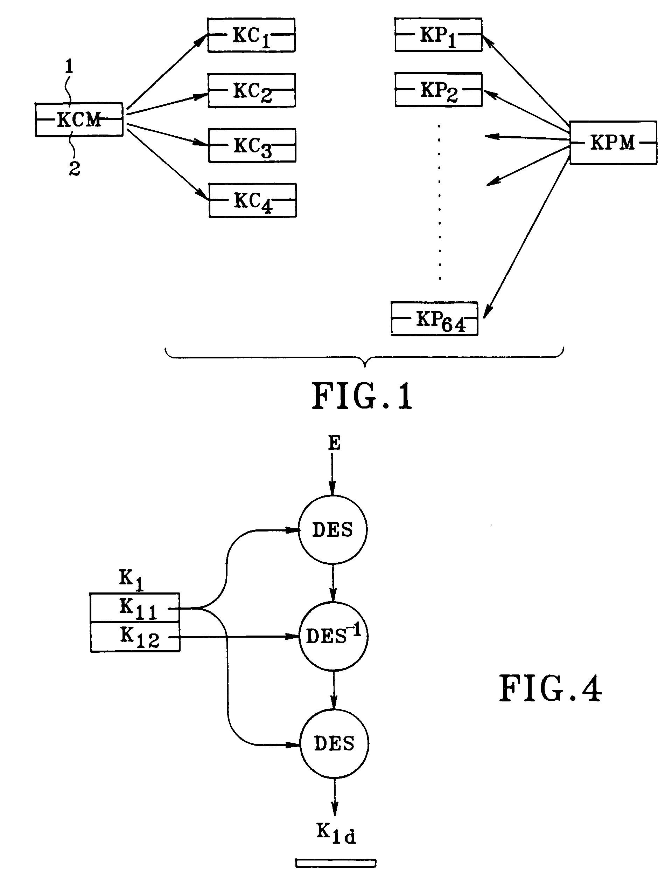

Selon la figure 1, on définit deux clés maîtres KCM et KPM se situant à un niveau de sécurité le plus élevé dans la hiérarchie des différentes clés utilisées. Avantageusement, chaque clé maître est double, c'est-à-dire constituée de deux mots 1,2 (de 64 bits par exemple) et donne naissance à plusieurs clés mères elles-mêmes doubles. Ainsi, la clé maître KCM donne naissance à quatre clés mères KC₁ à KC₄ relatives aux caisses C, tandis que la clé maître KPM donne naissance à 64 clés mères KP₁ à KP₆₄ relatives aux porte-monnaie P.

Un principe de diversification avantageux, parmi d'autres, est illustré sur la figure 4. Il est basé sur l'utilisation de l'algorithme dit "triple DES" (Data Encryption Standard) dans lequel une donnée de diversification E constitue la variable d'entrée d'un premier algorithme DES, le résultat du calcul constituant la variable d'entrée d'un second algorithme DES⁻¹ inverse du premier, le second résultat de calcul constituant la variable d'entrée d'un troisième algorithme DES identique au premier. L'algorithme DES fait intervenir une clé K₁₁ tandis que l'algorithme DES⁻¹ fait intervenir une clé K₁₂. Avantageusement, K₁₁ et K₁₂ constituent les deux clés simples d'une clé double K₁. Elles sont par exemple constituées d'un mot de 64 bits. Le résultat de l'algorithme "triple DES" est une clé K_{1d} diversifiée par rapport à la clé K₁ : à chaque valeur différente de E correspond une clé diversifiée K_{1d} différente. La clé K_{1d} a la même taille que les clés K₁₁ et K₁₂.

Les quatre clés mères KC₁ à KC₄ sont par exemple obtenues selon le procédé de la figure 4 en utilisant, en tant que donnée de diversification E, le numéro d'ordre 1 à 4 de ces clés, et en tant que clé K₁, la clé maître KCM. Afin de produire des clés doubles, la clé diversifiée K_{1d} constituant le résultat de calcul est utilisée en tant que donnée de diversification pour un second calcul donnant une deuxième clé diversifiée K_{2d}, la paire de clés K_{1d}, K_{2d} ainsi produite formant la clé double recherchée. Les soixante quatre clés mères KP₁ à KP₆₄ sont produites de la même manière.

Les clés mères KC₁ à KC₄ définissent quatre groupes de caisses, l'ensemble des caisses d'un parc de caisses donné comprenant par exemple 100 000 caisses étant réparties dans ces quatre groupes. Comme cela apparaîtra mieux par la suite, le nombre de groupes a été choisi faible car il conditionne directement l'encombrement de la zone mémoire de chaque porte-monnaie affectée au stockage des clés filles. Le classement des différentes caisses dans les différents groupes peut s'effectuer comme suit : on attribue respectivement aux quatre groupes les nombres binaires 00, 01, 10 et 11 et l'on classe dans le groupe 00 toutes les caisses dont les deux bits de poids faible du numéro de série correspondent à ce nombre, et ainsi de suite pour les autres caisses.

D'une manière tout à fait similaire, les 64 clés mères KP₁ à KP₆₄ définissent 64 familles de porte-monnaie, dix millions de porte-monnaie constituant par exemple le parc de porte-monnaie et étant répartis dans ces différentes familles. La répartition s'effectue en considérant les six bits de poids faible du numéro de série de chaque porte-monnaie.

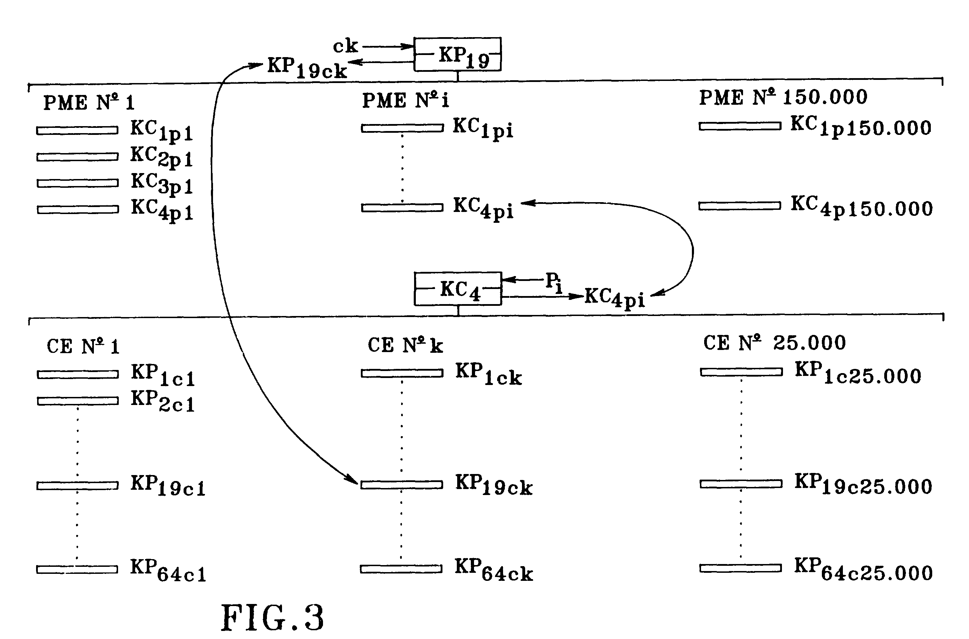

Un tel classement apparaît sur la figure 3 où le groupe de caisses N° 4 défini par la clé mère KC₄ contient le quart des caisses, à savoir vingt cinq mille caisses numérotées ici de 1 à 25 000 pour simplifier. De même, la famille de porte-monnaie N° 19 définie par la clé mère KP₁₉ contient une fraction correspondant à 1/64ième de l'ensemble des porte-monnaie, soit approximativement cent cinquante mille porte-monnaie numérotés ici de 1 à 150 000 pour simplifier.

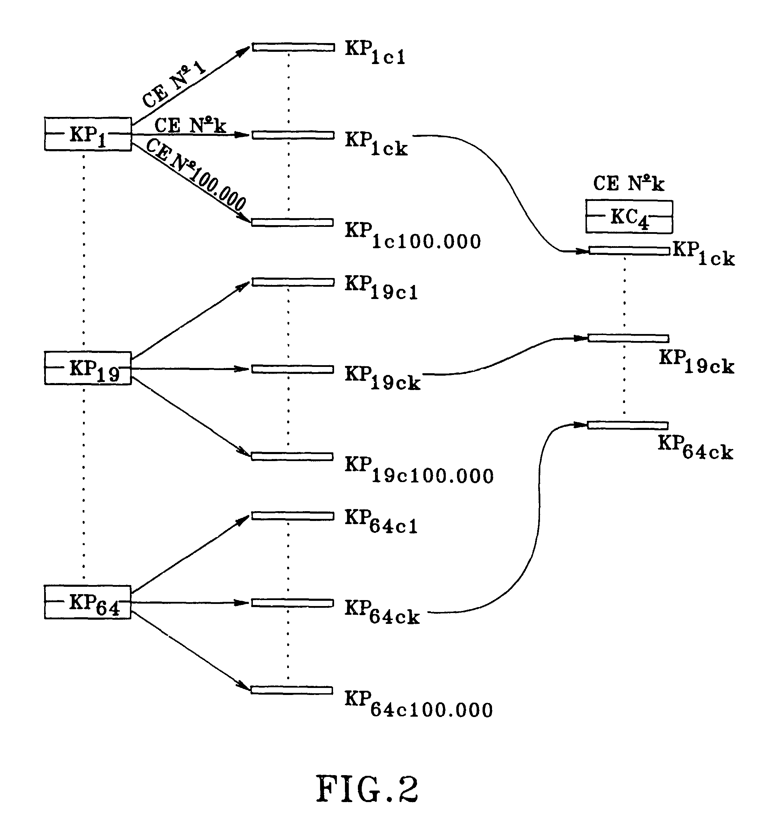

La façon dont sont produites les clés filles à partir des clés mères est exposée en regard de la figure 2. Par exemple, la clé mère KP₁ est diversifiée en cent mille clés filles KP_{1c1} à KP_{1c100 000} en utilisant comme donnée de diversification E le numéro de série des différentes caisses dans sa totalité, numéro qui occupe classiquement quatre à cinq octets. Les clés mères KP₂ à KP₆₄ sont diversifiées de la même façon à partir des numéros de série des caisses. Pour la diversification, on utilise avantageusement le procédé de la figure 4 basé sur l'algorithme "triple DES" dans lequel les clés K₁₁ et K₁₂ correspondent respectivement aux deux clés simples constituant chaque clé mère KPᵢ.

La diversification des clés mères KC₁ à KC₄ s'effectue de façon comparable, à partir des numéros de série des différents porte-monnaie, pour produire des clés filles KC₁ₚ₁ à KC_{1p10 000 000} jusqu'à KC₄ₚ₁ à KC_{4p10 000 000}.

On expose maintenant la façon dont on personnalise chaque caisse et chaque porte-monnaie en lui attribuant un jeu unique de clés. La caisse N° k, qui fait par exemple partie du groupe de caisses N°4 (figure 3), comprend tout d'abord une clé mère KC₄ qui est celle du groupe. Elle comprend ensuite 64 clés filles KP_{1ck} à KP_{64ck}. Ce jeu de clé filles a été constitué comme représenté sur la partie droite de la figure 2 : on a prélevé, dans chacun des 64 jeux de clés filles issues des 64 clés mères KP₁ à KP₆₄ relatives aux familles de porte-monnaie, uniquement la clé fille portant l'indice ck. Au total, la caisse N° k possède donc un jeu de 65 clés, dont l'une est une clé mère double et les autres sont des clés filles simples. La figure 3 précise aussi le contenu des jeux de clés pour les caisses N° 1 à 25 000 du même groupe.

On procède d'une manière similaire pour constituer le jeu de clés de chaque porte-monnaie. Par exemple, le porte-monnaie N° i comprend la clé mère KP₁₉ et les quatre clés filles KC₁ₚᵢ à KC₄ₚᵢ.

En comparant le contenu du jeu de clés d'un porte-monnaie N°i et d'une caisse N°k, on observe tout d'abord que chacun ne contient qu'une seule clé mère , respectivement KP₁₉ et KC₄, qui est bien relative au type de dispositif concerné, à savoir un porte-monnaie P et une caisse C. On ne retrouve donc pas dans un même jeu de clés une clé mère KPᵢ et une clé mère KCₖ, c'est-à-dire des clés dérivant directement de la clé maître KPM et des clés dérivant directement de la clé maître KCM.

En revanche, chaque jeu de clés d'un premier type de dispositif contient des clés filles qui émanent toutes d'une clé mère du second type de dispositif, la clé mère étant différente pour chaque clé fille : ainsi, le porte-monnaie N° i contient quatre clés filles KC₁ₚᵢ à KC₄ₚᵢ issues des clés mères KC₁ à KC₄ relatives aux caisses ; de même, la caisse N° k contient soixante quatre clés filles KP_{1ck} à KP_{64ck}.

L'utilisation de ces différentes clés va maintenant être exposée en relation avec l'application particulière du porte-monnaie électronique. Dans une telle application, la prise en compte d'une transaction consiste à débiter un certain montant sur le porte-monnaie et à créditer la caisse du commerçant concerné de ce même montant. Pour des raisons de sécurité, on impose que le crédit de la caisse ne puisse s'effectuer qu'après le débit du porte-monnaie, de façon à empêcher une création illicite de monnaie électronique aux dépens de l'organisme émetteur du porte-monnaie.

A cet effet, chaque porte-monnaie est agencé pour générer, à chaque transaction effectuée auprès d'une caisse donnée, un certificat de débit qui est la signature S d'un message M constitué d'informations relatives à la transaction considérée (identification du client, date, montant, etc...). La signature du message est le résultat d'un calcul effectué par un algorithme déterminé F et utilisant comme données d'entrée le message et une clé K. Quant à la caisse, elle vérifie l'authenticité de la signature S transmise par le porte-monnaie. Si l'algorithme F est du type symétrique, cette vérification nécessitera la même clé K. En cas de confirmation de la signature, la caisse pourra enregistrer le crédit correspondant à la transaction.

De façon très avantageuse, on calcule la clé K à partir de deux clés filles, l'une KC₄ₚᵢ dérivant de la clé mère KC₄ de la caisse N°k considérée et diversifiée avec le numéro du porte-monnaie considéré, l'autre KP_{19ck} dérivant de façon symétrique de la clé mère KP₁₉ du porte monnaie N° i et diversifiée avec le numéro k de la caisse. Par exemple, en référence à la figure 4, les deux clés filles KC₄ₚᵢ et KP_{19ck} constituent les deux clés K₁₁ et K₁₂, et un aléa, qui est fonction du couple (caisse, porte-monnaie) et toujours différent d'une session à l'autre, constitue la donnée de diversification E : une clé de session simple Kₛ est alors constituée par le résultat K_{1d} du calcul. Ce calcul est effectué à la fois dans la caisse et dans le porte-monnaie. Si l'on souhaite obtenir une clé de session double, on peut par exemple effectuer à nouveau le calcul de la figure 4 en utilisant cette fois, en tant que donnée de diversification E, la clé de session simple Kₛ déjà calculée.

On va maintenant exposer la façon dont les clés filles KC4pi et KP19ck sont mises à disposition dans la caisse N°k et dans le porte-monnaie N° i. A l'occasion d'une transaction, la caisse N°k et le porte-monnaie N°i identifient mutuellement en s'échangeant leurs numéros de série respectifs pi, ck. Le porte-monnaie calcule alors, grâce à sa clé mère KP₁₉ et au numéro de série ck, une clé fille KP_{19ck} selon la procédure décrite précédemment (voir les flèches correspondantes sur la figure 3). De même, la caisse calcule, grâce à sa clé mère KC₄ et au numéro de série pi, une clé fille KC₄ₚᵢ. De plus, le porte-monnaie N°i identifie, à partir des deux bits de poids faible du numéro de série ck de la caisse, le numéro de groupe 4 auquel celle-ci appartient et va rechercher, dans sa mémoire, la clé fille KC₄ₚᵢ relative à ce groupe. La caisse N°k procède de la même façon pour sélectionner sa clé fille KP_{19ck}. Le porte-monnaie et la caisse calculent alors, chacun à partir du couple commun KP_{19ck}, KC₄ₚᵢ, la clé de session Kₛ.

A supposer qu'un fraudeur s'empare d'un porte-monnaie N°i et arrive à en extraire le jeu de clés, il aura à sa disposition la clé mère KP₁₉ lui permettant de générer la clé fille KP_{19ck}, quelque soit la caisse n°k à laquelle il veut accéder.

En revanche, il ne pourra pas réutiliser le jeu des clés filles KC₁ₚᵢ à KC₄ₚᵢ pour l'insérer dans un lot de porte-monnaie frauduleux : en effet, ces clés sont spécifiques du porte-monnaie N°i. Il lui faudrait être capable de créer de nouvelles clés filles KC₁ₚⱼ à KC₄ₚⱼ adaptées à de nouveaux numéros d'identification de porte-monnaie pj : il serait nécessaire pour cela qu'il viole les différentes caisses pour en extraire les clés mères KC₁ à KC₄.

Selon une forme de réalisation moins avantageuse de l'invention, on ne définit qu'une seule famille de porte-monnaie et/ou qu'un seul groupe de caisses. Dans ce cas, chaque porte-monnaie et/ou caisse contient la clé mère unique de la famille ou du groupe et une seule clé fille dérivée de l'autre clé mère.

Selon une autre variante de l'invention, on utilise une seule clé maître pour générer toutes les clés mères des porte-monnaie et des caisses. Dans ce cas, on s'assure que les clés mères sont bien différentes pour les porte-monnaie et les caisses. On peut par exemple, prendre en compte les six bits de poids faible des numéros de série des porte-monnaie pour générer leurs clés mères, et les deux bits de poids fort des numéros de série des caisses pour générer leurs clés mères, les bits sélectionnés occupant, dans la donnée de diversification E, le même rang.

Selon une autre variante de l'invention, on ne calcule pas de clé de session Kₛ à partir des deux clés filles KC₄ₚᵢ et KP_{19ck} sélectionnées par le porte-monnaie et la caisse, mais on utilise directement cette paire de clés filles pour la procédure cryptographique commune.

Selon une autre variante non préférée de l'invention, la donnée d'identification d'un quelconque dispositif (porte-monnaie ou caisse) est constituée par le numéro d'ordre de la famille ou du groupe auquel il appartient, plutôt que par un numéro propre à ce dispositif.

L'invention s'applique à tous les niveaux de la hiérarchie d'un système quelconque de délivrance de biens ou de services, d'accès à des bases de données, d'échange de données privé ou public : l'invention servira à gérer aussi bien le dialogue entre l'autorité suprême du système et l'ensemble de dispositifs coopérant directement avec celle-ci, que le dialogue entre deux ensembles de dispositifs de niveau intermédiaire, ou encore au niveau le plus bas avec l'interlocuteur final.

L'invention s'appliquera dans toute procédure nécessitant la détention, par les deux dispositifs ayant à dialoguer ensemble, d'une clé commune, par exemple pour protéger par chiffrement la transmission de données sensibles, pour la génération d'un certificat de transaction ou d'une signature de message, etc...

## Revendications

1. Procédé pour produire une clé commune (K) attribuée à un quelconque dispositif (CEₖ) d'un ensemble de premiers dispositifs (CE) et à un quelconque dispositif (PMEᵢ) d'un ensemble de seconds dispositifs (PME) pour que ces deux dispositifs mettent en oeuvre une procédure cryptographique commune,
comprenant les étapes consistant à :
- attribuer une première clé mère (KC) à chacun desdits premiers dispositifs (CE), et une seconde clé mère (KP) à chacun desdits seconds dispositifs (PME) ;
- attribuer à chaque premier dispositif (CEₖ), à partir de la seconde clé mère (KP) relative aux seconds dispositifs (PMEᵢ) et d'une donnée d'identification (ck) attribuée à ce premier dispositif (CEₖ), au moins une clé fille (KP_{ck}) ;
- attribuer à chaque second dispositif (PMEᵢ), à partir de la première clé mère (KC) relative aux premiers dispositifs (CEₖ) et d'une donnée d'identification (pi) attribuée à ce second dispositif (PMEᵢ), au moins une clé fille (KCₚᵢ), et à chaque fois qu'une procédure cryptographique entre une premier dispositif (PMEᵢ) et un second dispositif (CEₖ) est demandée :
- transmettre, depuis chacun de ces deux dispositifs, la donnée d'identification (pi, ck) à l'autre dispositif ;
- élaborer, dans chacun de ces deux dispositifs, une clé fille (KP_{ck}, KCₚᵢ) à partir de la clé mère (KP, KC) du dispositif considéré et de la donnée d'identification (ck, pi) reçue de l'autre dispositif ;
- sélectionner, dans chacun de ces deux dispositifs, la clé fille (KCₚᵢ, KP_{ck}) correspondant à la donnée d'identification (pi,ck) reçue de l'autre dispositif ; et
- associer les deux clés filles constituées par la clé fille (KP_{ck} ; KCₚᵢ) élaborée à l'occasion de cette procédure et la clé fille sélectionnée (KCₚᵢ ; KP_{ck}) pour former un couple constituant ladite clé commune (K).

2. Procédé selon la revendication 1, consistant en outre à :
- définir plusieurs groupes (1 à 4) de premiers dispositifs (CE) et plusieurs familles (1 à 64) de seconds dispositifs (PME) ;
- affecter à chaque groupe ou famille une clé mère différente (KC_{g} ; KP_{f}), chaque dispositif du groupe ou de la famille possédant en tant que clé mère celle du groupe ou de la famille ;
- définir dans chaque premier dispositif (CEₖ), à partir des clés mères (KP_{f}) relatives aux seconds dispositifs, et de sa donnée d'identification (ck), plusieurs clés filles (KP_{fck}) ;
- définir dans chaque second dispositif (PMEᵢ), à partir des clés mères (KC_{g}) relatives aux premiers dispositifs et de sa donnée d'identification (pi), plusieurs clés filles (KC_{gpi}); et
- sélectionner, dans les premier et second dispositifs et parmi l'ensemble des clés filles détenues (KP_{fck} ; KC_{gpi}), celle (KP_{19ck}, KC₄ₚᵢ) dont la clé mère (KP₁₉, KC₄) correspond à la clé mère détenue par l'autre dispositif.

3. Procédé selon la revendication 1 ou 2, consistant en outre à attribuer à chaque dispositif d'un ensemble de dispositifs une donnée d'identification différente.

4. Procédé selon l'une quelconque des revendications précédentes, consistant en outre à élaborer les premières (KC_{g}) et secondes (KP_{f}) clés mères à partir de deux clés maîtres respectives (KCM, KPM) différentes.

5. Procédé selon l'une quelconque des revendications précédentes, consistant en outre à utiliser, pour élaborer les différentes clés précitées, un algorithme mettant en oeuvre deux clés (K₁₁, K₁₂) constituées selon le cas d'une clé maître ou clé mère double, ou dudit couple commun de clés filles.

6. Appareil pour gérer des transactions ou la délivrance de services et comprenant un ensemble de premiers dispositifs (CE) et un ensemble de seconds dispositifs (PME), un quelconque premier dispositif étant agencé pour échanger des transactions ou services avec un quelconque second dispositif en mettant en oeuvre une procédure cryptographique commune au moyen d'une clé de session (Kₛ) commune à ces deux dispositifs,
- chacun desdits dispositifs (CE, PME) comprend une mémoire dans laquelle est enregistrée une première clé mère (KC) pour ce qui concerne les premiers dispositifs (CE), et une seconde clé mère (KP) pour ce qui concerne les seconds dispositifs (PME) ;
- la mémoire de chaque premier dispositif (CEₖ) contient aussi au moins une clé fille (KP_{ck}) définie à partir de la seconde clé mère (KP) relative aux seconds dispositifs (PMEᵢ) et d'une donnée d'identification (ck) attribuée à ce premier dispositif (CEₖ);
- la mémoire de chaque second dispositif (PMEᵢ) contient aussi au moins une clé fille (KCₚᵢ) définie à partir de la première clé mère (KC) relative aux premiers dispositifs (CEₖ) et d'une donnée d'identification (pi) attribuée à ce second dispositif (PMEᵢ) ;
- chaque dispositif (CEₖ, PMEᵢ) comprend des moyens pour échanger sa donnée d'identification (pi, ck) avec un quelconque dispositif avec lequel une procédure cryptographique commune doit être mise en oeuvre, et des moyens de traitement pour élaborer une clé fille (KP_{ck}, KCₚᵢ) à partir de sa clé mère (KP, KC) et de la donnée d'identification reçue de l'autre dispositif, sélectionner dans sa mémoire la clé fille (KCₚᵢ, KP_{ck}) correspondant à la donnée d'identification (pi,ck) reçue de l'autre dispositif ; et associer les deux clés filles constituées par la clé fille (KP_{ck} ; KCₚᵢ) élaborée à l'occasion de cette procédure et la clé fille sélectionnée (KCₚᵢ ; KP_{ck}) pour former un couple constituant ladite clé commune (K).

7. Appareil selon la revendication 6, dans lequel chaque premier dispositif (CE) est une caisse électronique disposée dans un terminal point de vente et chaque second dispositif (PME) est un porte-monnaie électronique constitué d'un objet portatif et attribué à un client potentiel, le porte-monnaie étant agencé pour calculer un certificat de débit à partir de données caractérisant la transaction ou le service considéré et au moyen d'un algorithme déterminé utilisant, en tant que clé, ladite clé commune (K), ce certificat étant transmis à la caisse électronique qui vérifie l'authenticité de ce certificat au moyen d'un algorithme déterminé utilisant, en tant que clé, ladite clé commune (K).

## Patentansprüche

1. Verfahren zum Erzeugen eines gemeinsamen Schlüssels (K), der irgendeiner Vorrichtung (CEₖ) einer Gesamtheit erster Vorrichtungen (CE) und irgendeiner Vorrichtung (PMEᵢ) einer Gesamtheit zweiter Vorrichtungen (PME) zugewiesen ist, damit diese beiden Vorrichtungen eine gemeinsame Verschlüsselungsprozedur ausführen,
enthaltend die Schritte, die darin bestehen:
- jeder der ersten Vorrichtungen (CE) einen ersten Mutterschlüssel (KC) und jeder der zweiten Vorrichtungen (PME) einen zweiten Mutterschlüssel (KP) zuzuweisen;
- jeder ersten Vorrichtung (CEₖ) anhand des zweiten Mutterschlüssels (KP), der auf die zweiten Vorrichtungen (PMEᵢ) bezogen ist, und anhand von Identifizierungsdaten (ck), die dieser ersten Vorrichtung (CEₖ) zugewiesen sind, wenigstens einen Tochterschlüssel (KP_{ck}) zuzuweisen;
- jeder zweiten Vorrichtung (PMEᵢ) anhand des ersten Mutterschlüssels (KC), der auf die ersten Vorrichtungen (CEₖ) bezogen ist, und anhand von Identifizierungsdaten (pi), die dieser zweiten Vorrichtung (PMEᵢ) zugewiesen sind, wenigstens einen Tochterschlüssel (KCᵢ) zuzuweisen und jedesmal, wenn eine Verschlüsselungsprozedur zwischen einer ersten Vorrichtung (PMEᵢ) und einer zweiten Vorrichtung (CEₖ) angefordert wird:
- von jeder dieser zweiten Vorrichtungen die Identifizierungsdaten (pi, ck) an die andere Vorrichtung zu senden;
- in jeder dieser zweiten Vorrichtungen einen Tochterschlüssel (KP_{ck}, KCₚᵢ) anhand des Mutterschlüssels (KP, KC) der betrachteten Vorrichtung und anhand der von der anderen Vorrichtung empfangenen Identifizierungsdaten (ck, pi) zu entwickeln;
- in jeder dieser zweiten Vorrichtungen den Tochterschlüssel (KCₚᵢ, KP_{ck}), der den von der anderen Vorrichtung empfangenen Identifizierungsdaten (pi, ck) entspricht, zu wählen; und
- die beiden Tochterschlüssel, die durch den durch diese Prozedur entwickelten Tochterschlüssel (KP_{ck}; KCₚᵢ) und den gewählten Tochterschlüssel (KCₚᵢ; KP_{ck}) gebildet sind, einander zuzuordnen, um ein den gemeinsamen Schlüssel (K) bildendes Paar zu bilden.

2. Verfahren nach Anspruch 1, das außerdem darin besteht:
- mehrere Gruppen (1 bis 4) erster Vorrichtungen (CE) und mehrere Familien (1 bis 64) zweiter Vorrichtungen (PME) zu definieren;
- jeder Gruppe oder Familie einen anderen Schlüssel (KC_{g}; KP_{f}) zuzuteilen, wobei jede Vorrichtung der Gruppe oder der Familie als Mutterschlüssel jenen der Gruppe oder der Familie besitzt;
- in jeder ersten Vorrichtung (CEₖ) anhand der auf die zweiten Vorrichtungen bezogenen Muttelschlüssel (KP_{f}) und ihrer Identifizierungsdaten (ck) mehrere Tochterschlüssel (KP_{fck}) zu definieren;
- in jeder zweiten Vorrichtung (PMEᵢ) anhand der auf die ersten Vorrichtungen bezogenen Mutterschlüssel (KC_{g}) und ihrer Identifizierungsdaten (pi) mehrere Tochterschlüssel (KC_{gpi}) zu definieren; und
- unter den ersten und zweiten Vorrichtungen und aus der Gesamtheit der gehaltenen Tochterschlüssel (KP_{fck}; KC_{gpi}) jenen (KP_{19ck}, KC_{4gi}) zu wählen, dessen Mutterschlüssel (KP₁₉, KP₄) dem in der anderen Vorrichtung gehaltenen Mutterschlüssel entspricht.

3. Verfahren nach Anspruch 1 oder 2, das außerdem darin besteht, jeder Vorrichtung einer Gesamtheit von Vorrichtungen verschiedene Identifizierungsdaten zuzuweisen.

4. Verfahren nach irgendeinem der vorangehenden Ansprüche, das außerdem darin besteht, die ersten (KC_{g}) und zweiten (KP_{f}) Mutterschlüssel anhand zweier verschiedener jeweiliger Master-Schlüssel (KCM, KPM) zu entwickeln.

5. Verfahren nach irgendeinem der vorangehenden Ansprüche, das außerdem darin besteht, für die Entwicklung der verschiedenen obengenannten Schlüssel einen Algorithmus zu verwenden, der zwei Schlüssel (K₁₁, K₁₂) verwendet, die je nach Fall aus einem doppelten Master-Schlüssel oder Mutterschlüssel oder aus dem gemeinsamen Paar Tochterschlüssel gebildet sind.

6. Vorrichtung zum Steuern von Transaktionen oder zum Ausgeben von Diensten, mit einer Gesamtheit erster Vorrichtungen (CE) und einer Gesamtheit zweiter Vorrichtungen (PME), wobei irgendeine erste Vorrichtung so beschaffen ist, daß sie Transaktionen oder Dienste mit irgendeiner zweiten Vorrichtung unter Verwendung einer gemeinsamen Verschlüsselungsprozedur mittels eines diesen beiden Vorrichtungen gemeinsamen Sitzungsschlüssels (Kₛ) austauscht, wobei
- jede der Vorrichtungen (CE, PME) einen Speicher enthält, in dem ein erster Mutterschlüssel (KC) für die ersten Vorrichtungen (CE) und ein zweiter Mutterschlüssel (KP) für die zweiten Vorrichtungen (PME) aufgezeichnet ist;
- der Speicher jeder ersten Vorrichtung (CEₖ) außerdem wenigstens einen Tochterschlüssel (KP_{ck}) enthält, der anhand des auf die zweiten Vorrichtungen (PMEᵢ) bezogenen zweiten Mutterschlüssels (KP) und anhand von dieser ersten Vorrichtung (CEₖ) zugewiesenen Identifizierungsdaten (ck) definiert ist;
- der Speicher jeder zweiten Vorrichtung (PMEᵢ) außerdem wenigstens einen Tochterschlüssel (KCₚᵢ) enthält, der anhand des auf die ersten Vorrichtungen (CEₖ) bezogenen ersten Mutterschlüssels (KC) und anhand von dieser zweiten Vorrichtung (PMEᵢ) zugewiesenen Identifizierungsdaten (pi) definiert ist;
- jede Vorrichtung (CEₖ, PMEᵢ) Mittel zum Austauschen ihrer Identifizierungsdaten (pi, ck) mit irgendeiner Vorrichtung, mit der eine gemeinsame Verschlüsselungsprozedur ausgeführt werden soll, sowie Verarbeitungsmittel enthält, um einen Tochterschlüssel (KP_{ck}, KCₚᵢ) anhand ihres Mutterschlüssels (KP, KC) und anhand der von der anderen Vorrichtung empfangenen Identifizierungsdaten zu entwickeln, in ihrem Speicher den Tochterschlüssel (KCₚᵢ, KP_{ck}) zu wählen, der den von der anderen Vorrichtung empfangenen Identifizierungsdaten (pi, ck) entspricht; und die beiden Tochterschlüssel, die durch den anhand dieser Prozedur entwickelten Tochterschlüssel (KP_{ck}; KCₚᵢ) und den gewählten Schlüssel (KCₚᵢ; KP_{ck}) gebildet sind, einander zuzuordnen, um ein den gemeinsamen Schlüssel (K) bildendes Paar zu bilden.

7. Vorrichtung nach Anspruch 6, in der jede erste Vorrichtung (CE) eine elektronische Kasse ist, die an einem Verkaufspunkt-Terminal angeordnet ist, und jede zweite Vorrichtung (PME) ein elektronischer Geldbeutel ist, der aus einem tragbaren Gegenstand gebildet ist und einem potentiellen Kunden zugewiesen ist, wobei der Geldbeutel so beschaffen ist, daß er anhand der die betrachtete Transaktion oder den betrachteten Dienst kennzeichnenden Daten und mittels eines bestimmten Algorithmus, der als Schlüssel den gemeinsamen Schlüssel (K) verwendet, eine Ausgabeerlaubnis berechnet, wobei diese Erlaubnis an die elektronische Kasse gesendet wird, die die Echtheit dieser Erlaubnis mittels eines bestimmten Algorithmus, der als Schlüssel den gemeinsamen Schlüssel (K) verwendet, verifiziert.

## Claims

1. Method for producing a common key (K) allocated to any one device (CEₖ) of a set of first devices (CE) and to any one device (PMEᵢ) of a set of second devices (PME) in order that these two devices may implement a common cryptographic procedure,
comprising steps consisting in:
- allocating a first parent key (KC) to each of said first devices (CE), and a second parent key (KP) to each of said second devices (PME);
- allocating to each first device (CEₖ), on the basis of the second parent key (KP) relating to the second devices (PMEᵢ) and of an identification data item (ck) allocated to said first device (CEₖ), at least one child key (KP_{ck});
- allocating to each second device (PMEᵢ), on the basis of the first parent key (KC) relating to the first devices (CEₖ) and of an identification data item (pi) allocated to said second device (PMEᵢ), at least one child key (KCₚᵢ), and each time a cryptographic procedure between a first device (PMEᵢ) and a second device (CEₖ) is requested:
- transmitting, from each of said two devices, the identification data item (pi, ck) to the other device;
- preparing, in each of said two devices, a child key (KP_{ck}, KCₚᵢ) on the basis of the parent key (KP, KC) of the device in question and of the identification data item (ck, pi) received from the other device;
- selecting, from each of these two devices, the child key (KCₚᵢ, KP_{ck}) corresponding to the identification data item (pi, ck) received from the other device; and
- associating the two child keys constituted by the child key (KP_{ck}; KCₚᵢ) prepared for this procedure and the selected child key (KCₚᵢ; KP_{ck}) to form a pair constituting said common key (K).

2. Method according to Claim 1, consisting further in:
- defining several groups (1 to 4) of first devices (CE) and several families (1 to 64) of second devices (PME);
- allocating to each group or family a different parent key (KC_{g}; KP_{f}), each device of the group or of the family having, as parent key, that of the group or of the family;
- defining, in each first device (CEₖ), on the basis of the parent keys (KP_{f}) relating to the second devices, and of its identification data item (ck), several child keys (KP_{fck});
- defining, in each second device (PMEᵢ), on the basis of the parent keys (KC_{g}) relating to the first devices and of its identification data item (pi), several child keys (KC_{gpi}); and
- selecting, from the first and second devices and from among the set of child keys held (KP_{fck}, KC_{gpi}), the one (KP_{19ck}, KC₄ₚᵢ) for which the parent key (KP₁₉, KC₄) corresponds to the parent key held by the other device.

3. Method according to Claim 1 or 2, consisting further in allocating to each device of a set of devices a different identification data item.

4. Method according to any one of the preceding claims, consisting further in preparing the first (KC_{g}) and second (KP_{f}) parent keys on the basis of two different respective master keys (KCM, KPM).

5. Method according to any one of the preceding claims, consisting further in using, to prepare the different aforementioned keys, an algorithm implementing two keys (K₁₁, K₁₂) constituted, according to the case, by a master key or a dual parent key, or of said common pair of child keys.

6. Apparatus for managing transactions or the provision of services and comprising a set of first devices (CE) and a set of second devices (PME), any one first device being arranged to exchange transactions or services with any one second device while implementing a common cryptographic procedure by means of a session key (Kₛ) common to these two devices,
- each of said devices (CE, PME) comprises a memory in which there is recorded a first parent key (KC) concerning the first devices (CE), and a second parent key (KP) concerning the second devices (PME);
- the memory of each first device (CEk) also contains at least one child key (KP_{ck}) defined on the basis of the second parent key (KP) relating to the second devices (PMEi) and an identification data item (ck) attributed to this first device (CEₖ);
- the memory of each second device (PMEᵢ) also contains at least one child key (KCₚᵢ) defined on the basis of the first parent key (KC) relating to the first devices (CEk) and an identification data item (pi) allocated to this second device (PMEᵢ);
- each device (CEₖ, PMEᵢ) comprises means for exchanging its identification data item (pi, ck) with any one device with which a common cryptographic procedure has to be implemented, and processing means for preparing a child key (KP_{ck}, KCₚᵢ) on the basis of its parent key (KP, KC) and of the identification data item received from the other device, selecting from its memory the child key (KCₚᵢ, KP_{ck}) corresponding to the identification data item (pi, ck) received from the other device; and associating the two child keys constituted by the child key (KP_{ck}; KCₚᵢ) prepared for this procedure and the selected child key (KCpi; KPck) to form a pair constituting said common key (K).

7. Apparatus according to Claim 6, in which each first device (CE) is an electronic case arranged in a point-of-sale terminal and each second device (PME) is an electronic purse constituted by a portable object and allocated to a potential client, the purse being arranged so as to calculate a debit certificate on the basis of data characterising the transaction or the service in question and by means of a given algorithm using, as key, said common key (K), this certificate being transmitted to the electronic till, which checks the authenticity of this certificate by means of a given algorithm using, as key, said common key (K).
